# EUROPÄISCHE PATENTANMELDUNG

(11) **EP 4 714 692 A1**
(43) Veröffentlichungstag der Anmeldung: **25.03.2026**
(21) Anmeldenummer: 25201413.9
(22) Anmeldetag: 10.09.2025
(51) Int. Cl.: B60G 21/055

(54) **HALTEVORRICHTUNG FÜR EINEN STABILISATOR FÜR EIN KRAFTFAHRZEUG**

(30) Priorität: 20.09.2024 DE 102024127272
(71) Anmelder: Muhr und Bender KG, 57439 Attendorn (DE)
(72) Erfinder: HLUZIN, Filip, 75002 Prerov (CZ); MURON, Ales, 77900 Olomouc (CZ); LIETZ, Marko, 58239 Schwerte (DE); SIBL, Michal, 79603 Prostejov (CZ); PECENKA, Lubos, 75642 Choryne (CZ)
(74) Vertreter: Neumann Müller Oberwalleney Patentanwälte PartG mbB

(57) **Zusammenfassung**

Die Erfindung betrifft eine Haltevorrichtung für einen Stabilisator für ein Kraftfahrzeug, umfassend: einen Bogenabschnitt 2 mit zumindest einem zentralen Angussbereich 3, zumindest eine an dem Bogenabschnitt 2 um den Angussbereich 3 gebildete Rippenstruktur 4 mit mehreren Rippen 5 und mehreren zwischen den Rippen 5 gebildeten Ausnehmungen 6, wobei die Rippen 5 der Rippenstruktur 4 derart angeordnet sind, dass die Ausnehmungen 6 in Draufsicht auf den Angussbereich 3 auf mindestens zwei konzentrisch um den Angussbereich 3 angeordneten Kreislinien 7 mit unterschiedlichen Radien liegen, wobei zumindest drei Ausnehmungen 6 in Umfangsrichtung um den Angussbereich 3 verteilt angeordnet sind.

## Beschreibung

Die Erfindung betrifft eine Haltevorrichtung für einen Stabilisator für ein Kraftfahrzeug mit einem Bogenabschnitt und einer an dem Bogenabschnitt gebildeten Rippenstruktur mit mehreren Rippen und mehreren zwischen den Rippen gebildeten Ausnehmungen. Weiter betrifft die Erfindung eine Lagerung für einen Stabilisator für ein Kraftfahrzeug.

Solche Haltevorrichtungen werden als Teil einer Lagerung dazu eingesetzt, einen Stabilisator an einem Fahrgestell zu befestigen.

Aus der US 11,440,371 B2 ist beispielsweise ein Lager für einen Stabilisator eines Fahrzeugs bekannt, das einen Flansch mit mindestens einem Halteabschnitt und einer zellulären Struktur aufweist. Weitere Haltevorrichtungen sind zum Beispiel in DE 10 2015 004 466 B3, WO 2019/025728 A1, WO 2010/149756 A1, DE 10 2013 201 058 A1, US 2020/238784 A1, DE 10 2019 003 884 A1 sowie US 11,440,371 B2 offenbart.

Aus der FR 3 134 542, die als gattungsbildender Stand der Technik angesehen werden kann, ist ein Kunststoffflansch für ein Fahrzeugstabilisatorlager, mit einer Wabenstruktur bekannt.

Der Erfindung liegt die Aufgabe zugrunde, eine Haltevorrichtung für einen Stabilisator bereitzustellen, die bei einer schnellen und kostengünstigen Herstellung eine hohe Stabilität ermöglicht.

Die Aufgabe wird gelöst durch eine Haltevorrichtung für einen Stabilisator für ein Kraftfahrzeug mit einem Bogenabschnitt mit zumindest einem zentralen Angussbereich und zumindest einer an dem Bogenabschnitt um den Angussbereich gebildeten Rippenstruktur mit mehreren Rippen und mehreren zwischen den Rippen gebildeten Ausnehmungen. Die Rippen der Rippenstruktur sind erfindungsgemäß derart angeordnet, dass die Ausnehmungen in Draufsicht auf den Angussbereich auf mindestens zwei konzentrisch um den Angussbereich angeordneten Kreislinien mit unterschiedlichen Radien liegen. Erfindungsgemäß sind auf einer kleinsten Kreislinie um den Angussbereich zumindest drei Ausnehmungen in Umfangsrichtung um den Angussbereich verteilt angeordnet, insbesondere mindestens vier Ausnehmungen.

Die Rippen- bzw. Stegstruktur ermöglicht eine Material- und somit Kosteneinsparung bei der Herstellung der Haltevorrichtung. Indem die Rippenstruktur an dem Bogenabschnitt, in Draufsicht auf den Angussbereich, in konzentrischen Kreisen um einen zentralen Angussbereich gebildet ist, kann ein fließfähiges Material, beispielsweise eine Schmelze, beim Herstellen der Haltevorrichtung schnell und gleichmäßig in einer Form, insbesondere einer Kavität eines Spritzgießwerkzeugs, verteilt werden. Die Anordnung der Ausnehmungen der Rippenstruktur auf konzentrisch um den zentralen Angussbereich angeordneten Kreislinien ermöglicht einen verbesserten Materialfluss. Dadurch, dass zumindest drei bzw. vier Ausnehmungen in Umfangsrichtung um den Angussbereich verteilt angeordnet sind, kann gleichermaßen die Stabilität der Haltevorrichtung sichergestellt sowie das erforderliche Material eingespart werden.

Vorzugsweise sind die Ausnehmungen bzw. die dazwischen gebildeten Stegbereiche so gestaltet, dass sich eine möglichst widerstandsarme und wandstärkengleiche Geometrie ergibt. Besonders günstig sind entlang des Fließweges etwa gleichbleibende Stegquerschnitte mit geringen Umlenkungen, was zu einer Verringerung von Materialfüllung und Gegendruck beiträgt. Durch Reduzierung des beim Spritzgießen nötigen Fülldrucks kann, bei gegebenem maximalen Maschinendruck, die Anzahl der Produktkavitäten je Werkzeug bzw. pro Werkzeugfläche erhöht werden. Dies führt zu einer höheren Ausbringung bzw. Effizienz.

Die Haltevorrichtung ist dazu ausgebildet, einen Stabilisator an einem Fahrwerk eines Kraftfahrzeugs zu befestigen. Beispielsweise kann die Haltevorrichtung in Form eines Haltebügels gebildet sein. Zur Aufnahme eines Gummilagers für den Stabilisator weist die Haltevorrichtung den Bogenabschnitt auf, das heißt einen bogenförmigen Abschnitt, der eine Öffnungen zum Aufnehmen des Gummilagers überspannt. Die Haltevorrichtung kann in einem Spritzgussverfahren hergestellt werden. Bei durchgehenden Ausnehmungen kann das Gummilager in diese formschlüssig eingreifen, wodurch eine geometrische Verzahnung gebildet ist.

Der Angussbereich ist zentral, d.h. in Draufsicht auf den Angussbereich mittig, an dem Bogenabschnitt angeordnet. Der Angussbereich bezeichnet einen durch die Ausnehmungen der Rippenstruktur begrenzten Bereich um einen Angusspunkt der Haltevorrichtung. Der Angusspunkt beschreibt die Stelle, an dem der Bogenabschnitt, insbesondere die Haltevorrichtung, beim Herstellen, insbesondere beim Spritzgießen, angegossen worden ist und kann beispielsweise in Form einer Vertiefung und/oder Erhebung auf der Oberfläche der des Angussbereichs ausgebildet sein.

Die Rippenstruktur umfasst die an dem Bogenabschnitt gebildeten Rippen und Ausnehmungen. Die Rippen der Rippenstruktur verlaufen derart zu dem Angussbereich, dass die Ausnehmungen zumindest teilweise auf konzentrischen Kreislinien liegen. Unter konzentrisch wird verstanden, dass die Kreislinien den Angussbereich, insbesondere den in dem Angussbereich angeordneten Angusspunkt jeweils als Kreismittelpunkt aufweisen. Die Kreislinien können einen kreisförmige, aber auch ellipsenförmigen Umfang aufweisen.

Die Kreislinien bezeichnen fiktive Zuordnungslinien für die Ausnehmungen, die durch die Gestaltung der Rippenstruktur definiert sind. Die Rippen der Rippenstruktur verlaufen beispielsweise zumindest teilweise in radialer Richtung und in Umfangsrichtung um den Angussbereich. Die Ausnehmungen sind jeweils durch eine oder mehrere Rippen begrenzten freie Bereiche des Bogenabschnitts. Die Rippen sind derart um dem Angussbereich gebildet, dass die Ausnehmungen in Draufsicht auf den Angussbereich auf mehreren Kreislinien mit unterschiedlichen Radien liegen. Die Draufsicht auf den Angussbereich bezeichnet eine senkrechte Sicht auf den Angussbereich. In Umfangsrichtung um den Angussbereich, d.h. bevorzugt auf einer Kreislinie mit dem geringsten Radius zu dem Angusspunkt, also der kleinsten Kreislinie, sind zumindest vier Ausnehmungen verteilt angeordnet. Die zumindest vier Ausnehmungen können jeweils im gleichen Abstand oder alternativ in zufälligen Abständen in Umfangsrichtung um den Angussbereich voneinander angeordnet sein.

Nach einer möglichen Weiterbildung kann das Gesamtvolumen aller Ausnehmungen zu einem Gesamtvolumen des Materials des Bogenabschnitts, insbesondere der Haltevorrichtung, in einem Verhältnis von größer als 30%, insbesondere größer als 40 % stehen. Ein Maximalwert für den Volumenanteil der Ausnehmungen am einhüllenden Gesamtvolumen kann beispielsweise bei 60% liegen. Das Gesamtvolumen aller Ausnehmungen der Rippenstruktur kann beispielsweise durch die Form der Ausnehmungen oder die Anzahl der Ausnehmungen angepasst sein. Durch ein großes Hohlvolumen im Verhältnis zum Material kann beim Kunststoffspritzgießen eine schnelle Herstellung mit hoher Effizienz ermöglicht werden.

Die Gestaltung der Rippenstruktur, insbesondere der Rippen und der Ausnehmungen, kann beispielsweise mit Hilfe eine FEM-Berechnung oder anderen Simulations-Berechnungen unterstützt werden, sodass die Rippenstruktur bei einer hohen Anzahl an Ausnehmungen, abhängig von der Wanddicke beispielsweise mehr als 70, dennoch die erforderliche Stabilität für den jeweiligen Anwendungsfall aufweist. Durch den relativ großen Gesamthohlraum aller Ausnehmungen, der sich durch die Form und/oder die Anzahl der Ausnehmungen ergibt, können die für die Haltevorrichtung erforderliche Materialmenge und entsprechend auch die Herstellungskosten der Haltevorrichtung noch weiter reduziert werden. Darüber hinaus bewirkt die Einsparung des erforderlichen Materials eine Reduzierung der Fertigungszeiten, da eine Form für die Haltevorrichtung schneller mit dem fließfähigen Material ausgefüllt werden kann.

Gemäß einer möglichen Ausgestaltung können die Rippen der Rippenstruktur derart angeordnet sein, dass die Ausnehmungen einer ersten Kreislinie zu den Ausnehmungen einer radial benachbarten Kreislinie zumindest teilweise in Umfangsrichtung versetzt angeordnet sind. Unter der radial benachbarten Kreislinie wird eine zweite Kreislinie mit einem im Vergleich zu einem ersten Radius der ersten Kreislinie kleineren oder größeren zweiten Radius verstanden. Teilweise versetzt bedeutet in diesem Zusammenhang, dass eine Teilmenge der auf der ersten Kreislinie angeordneten Ausnehmungen in Umfangsrichtung versetzt zu den Ausnehmungen der radial benachbarten Kreislinie angeordnet ist. Es ist auch denkbar, dass alle Ausnehmungen auf der ersten Kreislinie in Umfangsrichtung versetzt zu den Ausnehmungen auf der radial benachbarten Kreislinie angeordnet sind.

Nachstehend sind die auf der ersten Kreislinie angeordneten Ausnehmungen als erste Ausnehmungen und die auf der zweiten Kreislinie angeordneten Ausnehmungen als zweite Ausnehmungen bezeichnet. Zum Beispiel sind die ersten Ausnehmungen derart in Umfangsrichtung zu den zweiten Ausnehmungen versetzt angeordnet, dass eine erste Ausnehmung einer Teilmenge der ersten Ausnehmungen zumindest abschnittsweise in Umfangsrichtung zwischen zwei benachbarten zweiten Ausnehmungen angeordnet ist. In diesem Zusammenhang wird unter abschnittsweise verstanden, dass die ersten Ausnehmungen der Teilmenge jeweils mit einem Teilabschnitt in einem Umfangsbereich zwischen zwei benachbarten zweiten Ausnehmungen angeordnet sind. Die ersten Ausnehmungen können vollständig in Umfangsrichtung zwischen zwei zweiten Ausnehmungen angeordnet sein, wobei eine Überlappung möglich ist.

Darüber hinaus können die Ausnehmungen einer zu der ersten und/oder zweiten Kreislinie radial benachbarten dritten Kreislinie zu den ersten oder zweiten Ausnehmungen zumindest teilweise in Umfangsrichtung versetzt angeordnet sein. Weitere auf einer zu der ersten, zweiten und/oder dritten Kreislinie radial benachbarten Kreislinie angeordnete Ausnehmungen können jeweils in Umfangsrichtung versetzt angeordnet sein. Dadurch, dass die Ausnehmungen radial benachbarter Kreislinien in Umfangsrichtung versetzt zueinander angeordnet sind, kann die Fließrichtung des Materials beim Angießen der Haltevorrichtung optimiert werden, sodass eine Form schneller und gleichmäßiger gefüllt werden kann. Hierdurch können die Herstellungszeit und folglich auch die Herstellungskosten noch weiter reduziert werden.

Nach einer möglichen Weiterbildung kann der Bogenabschnitt eine Innenfläche zum Aufnehmen eines Gummilagers und eine Außenfläche aufweisen. Die Breite des Bogenabschnitts bzw. Gummilagers kann beispielsweise zwischen 25 und 75 mm betragen. Die Innenfläche kann sich bogenförmig um eine Längsachse erstrecken und eine zu dieser senkrechte Mittelachse definieren, auf welcher der Angussbereich angeordnet ist. Die Innenfläche und die Außenfläche des Bogenabschnitts sind in radialer Richtung zur Längsachse im Abstand voneinander angeordnet. Der Abstand zwischen Innenfläche und Außenfläche definiert die Dicke des Bogenabschnitts. Zwischen der Innenfläche und einer Bodenfläche der Ausnehmungen kann eine Wandung des Bogenabschnitts gebildet sein. Die Dicke der Wandung kann beispielsweise zwischen 3 und 14 mm betragen. Der Bogenabschnitt erstreckt sich in seiner Breite in axialer Richtung bzw. parallel zur Längsachse. Die Öffnung des Bogenabschnitts wird durch die Innenfläche definiert. Das Gummilager kann in der Öffnung des Bogenabschnitts aufgenommen werden. Die Mittelachse ist senkrecht zu der Längsachse angeordnet und kann in Bezug auf die axiale Erstreckung bzw. Breite des Halteelements mittig angeordnet sein. Die Angussbereich kann auf der Mittelachse an der Außenfläche oder Innenfläche des Bogenabschnitts angeordnet sein. Die Mittelachse und die Längsachse definieren eine Mittelebene, die auch als Symmetrieebene bezeichnet werden kann. Bevorzugt kann der Angusspunkt auf der Mittelachse angeordnet sein.

Nach einer Ausgestaltung können die Ausnehmungen den Bogenabschnitt von der Außenfläche bis zur Innenfläche durchdringen. In diesem Fall können die Ausnehmungen als freie Bereiche des Bogenabschnitts gebildet sein, die sich von der Außenfläche bis zu der Innenfläche erstrecken. Die Innenfläche kann eine durch die Ausnehmungen unterbrochene und durch die Rippen gebildete Gitterstruktur aufweisen, sodass zumindest der Bogenabschnitt keine durchgehende Stützwand für das Gummilager aufweist. Indem die Ausnehmungen die Innenfläche des Bogenabschnitts unterbrechen, kann eine mechanische Verzahnung zwischen dem Gummilager und der Haltevorrichtung erzeugt werden, da das Gummimaterial jeweils in die Ausnehmungen hineingedrückt wird. Hierdurch kann Relativbewegungen zwischen dem Gummilager und Haltevorrichtung entgegenwirkt werden.

Die Ausnehmungen sind insbesondere so gestaltet, dass ihre Geometrie dem Materialfluss beim Spritzgießen einen möglichst geringen Widerstand bietet. Hierfür kann zumindest eine Mehrzahl von Ausnehmungen auf zumindest der kleinsten Kreislinie und einer weiteren Kreislinie, insbesondere mindestens der drei kleinsten Kreislinien, in Draufsicht auf den Angussbereich als unrunde, insbesondere tropfenförmige oder elliptische, Ausnehmungen ausgebildet sein. Unter tropfenförmig wird insbesondere verstanden, dass eine Ausnehmung einen gleichmäßig runden, einseitig spitz zulaufenden bzw. mit kleinem Radius gerundeten Umfang aufweist. Rundungen der Ausnehmungen haben vorzugsweise einen Radius von mehr als 0,25 mm, vorzugsweise mehr als 0,5 mm. Die Verwendung von unrunden Ausnehmungen gilt für vorzugsweise mindestens 60 %, 80 % oder alle der Ausnehmungen auf den kleinsten zwei oder drei Kreislinien. Die unrunden Ausnehmungen sind vorzugsweise strahlenförmig um den Angussbereich ausgerichtet. Hiermit ist gemeint, dass die Ausnehmungen mit ihren größten Öffnungserstreckungen auf vom Angussbereich ausgehenden Radialstrahlen oder spitzwinklig hierzu angeordnet sind. Eine Teilzahl von Ausnehmungen kann beispielsweise auch kreisförmig, wabenförmig und/oder polygonförmig, beispielsweise dreieckig oder rechteckig ausgebildet sein.

Die auf einer Kreislinie angeordneten Ausnehmungen können ein oder mehrere der Formen aufweisen. Tropfenförmige Ausnehmungen können derart angeordnet sein, dass eine durch den zulaufenden Umfang gebildete Spitze der Tropfenform jeweils radial in Richtung auf den Angussbereich, insbesondere den Angusspunkt, oder in entgegensetze Richtung ausgerichtet ist. Ferner können die Ausnehmungen unabhängig von der jeweiligen Form jeweils abgerundete Ecken aufweisen, um die Verteilung des fließfähigen Materials beim Angießen der Haltevorrichtung weiter zu verbessern. Die Bestimmung der Form und deren Position auf dem Bogenabschnitt kann ebenfalls mit der FEM-Berechnung oder anderen Simulations-Berechnungen unterstützt werden. Durch die variable Form der Ausnehmungen kann die Anordnung und Ausrichtung der Ausnehmungen auf dem Bogenabschnitt optimiert werden.

Nach einer möglichen Weiterbildung kann die Rippenstruktur Ausnehmungen auf mehreren Kreislinien aufweisen, wobei auf der größten Kreislinie mindestens die zweifache Anzahl an Ausnehmungen als auf der kleinsten Kreislinie vorgesehen ist. Die kleinste Kreislinie bezeichnet die Kreislinie mit dem kleinsten Radius zum Angussbereich, insbesondere dem Angusspunkt. Die zumindest vier Ausnehmungen können auf der kleinsten Kreislinie angeordnet sein. In diesem Zusammenhang wird unter der größten Kreislinie die letzte Kreislinie verstanden, auf welche über ihrem gesamten Umfang verteilt Ausnehmungen angeordnet sind. Die größte Kreislinie kann um die Mittelachse den größten Radius aufweisen. Der größte Radius kann weniger als die Hälfte der Breite des Bogenabschnitts betragen.

Auf der kleinsten Kreislinie können zumindest vier, sechs oder acht Ausnehmungen angeordnet sein. Entsprechend können auf der größten Kreislinie zumindest acht, zwölf oder sechzehn Ausnehmungen vorgesehen sein. Auf der größten Kreislinie kann auch mindestens die dreifache Anzahl an Ausnehmungen als auf der kleinsten Kreislinie vorgesehen sein. Beispielsweise können auf der kleinsten Kreislinie acht Ausnehmungen und auf der größten Kreislinie 24 Ausnehmungen angeordnet sein.

Es ist ebenfalls denkbar, dass auf weiteren über die größte Kreislinie hinausgehenden Kreislinien ebenfalls Ausnehmungen vorgesehen sind, insbesondere im Bereich der Seitenabschnitte. Aufgrund der Begrenzung durch die Breite des Bogenabschnitts sind auf diesen Kreislinien jedoch weniger Ausnehmungen angeordnet. Besonders bevorzugt kann die Rippenstruktur drei bis zwölf, drei bis zehn oder vier bis neun Kreislinien mit steigenden Radien zum Angussbereich aufweisen. Hierbei können auch Kreislinien mit einbezogen sein, welche in Draufsicht auf den Angussbereich keinen vollständig auf dem Bogenabschnitt angeordneten Umfang aufweisen.

Die Haltevorrichtung kann zwei endseitig an dem Bogenabschnitt gebildete Stützabschnitte aufweisen, die jeweils eine Öffnung zum Anordnen bzw. Einstecken eines Verbindungselements aufweisen, wobei die Rippenstruktur die Öffnungen jeweils mindestens bis zur Hälfte in Umfangsrichtung umschließt. Die Stützabschnitte sind jeweils an den Enden des Bogenabschnitts gebildet. Die Öffnungen können bevorzugt quer, insbesondere mit Abstand senkrecht zu der Längsachse bzw. parallel zu der Mittelachse angeordnet sein. Weiter kann an den Stützabschnitten jeweils eine die Öffnungen umgebende Kreisrippe zum Verstärken vorgesehen sein. Die Öffnungen der Stützabschnitte sind jeweils in Draufsicht auf den Angussbereich von den Ausnehmungen der Rippenstruktur zumindest bis zur Hälfte in Umfangsrichtung umschlossen.

Die Stützabschnitte können jeweils eine Stützfläche zum Anordnen der Haltevorrichtung an einem Trägerteil des Fahrwerks des Kraftfahrzeugs aufweisen. Die Stützflächen können jeweils frei von eine Rippenstruktur sein, um die Verbindungsfläche zwischen der Haltevorrichtung und der Oberfläche des Fahrwerks zu maximieren. Die Stützabschnitte ermöglichen eine einfache und zuverlässige Anordnung der Haltevorrichtung an dem Fahrwerk. Indem die Öffnungen der Stützabschnitte ebenfalls von der Rippenstruktur umschlossen sind, kann die für die Haltevorrichtung erforderliche Materialmenge weiter reduziert werden.

Nach einer möglichen Ausgestaltung können der Bogenabschnitt und die Stützabschnitte einstückig aus einem faserverstärkten Kunststoff ausgebildet sein. Der Bogenabschnitt kann zumindest and der Außenfläche kantenlos in die Stützabschnitte übergehen, um den Materialfluss vom Bogenabschnitt in die Stützabschnitte beim Angießen der Haltervorrichtung zu verbessern. Der Bogenabschnitt und die Stützabschnitte können aus Polyamid oder PET gebildet sein.

Die Fasern können Glasfasern sein. Alternativ oder zusätzlich können die Fasern Carbonfasern und/oder Aramidfasern sein. Die Fasern können als Kurzfasern mit einer Länge von weniger als 5 mm oderzwischen 2,5 und 3,5 mm ausgebildet sein. Der Durchmesser der Fasern kann zwischen 0,1 und 0,5 mm oder zwischen 0,2 und 0,3 mm liegen. Bei Verwendung von Glasfasern kann der Kunststoff beispielsweise 30 bis 50 Gew.-% oder 35 bis 45 Gew.-% an Fasern aufweisen.

Durch die Fasern kann die mechanische Festigkeit der Haltevorrichtung verstärkt werden. Indem der Angussbereich, insbesondere der Angusspunkt, zentral auf dem Bogenabschnitt angeordnet ist, kann eine zu dem Angussbereich radiale Ausrichtung der Fasern ermöglicht werden. Die Überlappung der Ausnehmungen auf zwei radial benachbarten Kreislinien ermöglicht eine verbesserte Verteilung der Kunststoffschmelze sowie ebenfalls eine Ausrichtung der Fasern in Umfangsrichtung um den Angussbereich.

Die Rippen bzw. Stegbereiche können derart angeordnet sein, dass zumindest eine Teilzahl der auf unterschiedlichen Kreislinien angeordneten Ausnehmungen in Draufsicht auf den Angussbereich radial überlappend angeordnet ist. Die Ausnehmungen radial benachbarter Kreislinien, zum Beispiel der ersten und zweiten Kreislinie, können in Draufsicht auf den Angussbereich radial überlappend angeordnet sein. Die radiale Überlappung kann durch die Form der Ausnehmungen und/oder das Verhältnis der Radien der benachbarten Kreislinien umgesetzt werden. Beispielsweise kann eine ellipsenförmige oder tropfenförmige erste Ausnehmung radial überlappend zu einer zweiten Ausnehmung angeordnet sein. Alternativ oder zusätzlich kann der Radius der ersten Kreislinie nur geringfügig kleiner als der Radius der zweiten Kreislinie sein.

Unter der Teilzahl wird ein Anteil der auf einer Kreiszahl angeordneten Ausnehmungen verstanden, beispielsweise ein Viertel, ein Drittel oder die Hälfte der Ausnehmungen. Darüber hinaus können auch alle Ausnehmungen einer Kreislinie radial überlappend zu einer radial benachbarten Kreislinie angeordnet sein. Durch die radiale Überlappung der Ausnehmungen unterschiedlicher Kreislinien, die alternativ oder zusätzlich zu der Überlappung in Umfangsrichtung vorgesehen sein kann, kann die mögliche Anzahl an Ausnehmungen auf dem Bogenabschnitt und/oder den Stützabschnitten weiter erhöht werden.

Der Angussbereich kann kreis- bzw. zylinderförmig gebildet sein und einen größeren Durchmesser als eine Dicke der Rippen aufweisen. **In** diesem Zusammenhang wird unter kreisförmig verstanden, dass der Angussbereich in Draufsicht einen vieleckigen, beispielsweise 4-eckigen bis 12-eckigen, oder runden Umfang aufweisen kann. Der Durchmesser des Angussbereichs kann den Durchmesser eines runden Umfangs oder den Kantenabstand zwischen gegenüberliegenden Kanten eines Vieleckigen Umfangs bezeichnen. Die Ausnehmungen können an die Rippen angrenzende Seitenwände aufweisen, die insbesondere parallel zu der Mittelachse und/oder senkrecht zu der Längsachse des Bogenabschnitts angeordnet sind. Die Dicke der Rippen bezeichnet jeweils den Abstand zweier durch eine Rippe voneinander getrennter Ausnehmungen. Dadurch, dass die Dicke der Rippen geringer als der Durchmesser des Angussbereichs ist, kann die möglich Anzahl an auf dem Bogenabschnitt und/oder den Stützabschnitten gebildeten Ausnehmungen weiter erhöht werden, wodurch die erforderliche Materialmenge für die Haltevorrichtung weiter reduziert werden kann.

Nach einer möglichen Weiterbildung kann der Bogenabschnitt zwei oder mehr Angussbereiche aufweisen, wobei die Ausnehmungen der Rippenstruktur jeweils in Draufsicht auf den Angussbereich auf konzentrisch um den jeweiligen Angussbereich angeordneten Kreislinien liegen. Gegebenenfalls kann es erforderlich sein, dass der Bogenabschnitt mehr als einen Angussbereich aufweist, insbesondere an mehr als einem Angusspunkt angegossen worden ist. Die Angussbereiche können an unterschiedlichen Positionen auf der Innenfläche oder der Außenfläche des Bogenabschnitts angeordnet sein. Die Ausnehmungen der Rippenstruktur sind jeweils auf Kreislinien angeordnet, die jeweils konzentrisch zu unterschiedlichen Angussbereichen, insbesondere Angusspunkten, verlaufen. Die Ausnehmungen auf Kreislinien unterschiedlicher Angusspunkte können radial überlappend angeordnet sein. Mehrere Angussbereiche, insbesondere Angusspunkte, ermöglichen beispielsweise flexiblere Einstellungen des Materialflusses während eines Spritzgießprozesses und/oder die Kombination von mehreren Kunststoffmaterialien.

Die Erfindung betrifft weiter eine Lagerung für einen Stabilisator für ein Kraftfahrzeug mit einer Haltevorrichtung, einem Unterteil und einem zwischen dem Bogenabschnitt der Haltevorrichtung und dem Unterteil angeordneten Gummilager. Das Unterteil und der Bogenabschnitt bilden eine Aufnahme für des Gummilager. Der Stabilisator kann in dem Gummilager zwischen dem Unterteil und der Haltevorrichtung gelagert sein.

Ein Ausführungsbeispiel der Erfindung ist nachstehend mit Bezug auf die Zeichnungen erläutert. In den Zeichnungen zeigen in schematischer Darstellung:
- Figur 1: eine perspektivische Ansicht einer erfindungsgemäßen Haltevorrichtung für einen Stabilisator für ein Fahrwerk eines Kraftfahrzeugs, mit einer Rippenstruktur,
- Figur 2: eine Draufsicht auf die Haltevorrichtung von Figur 1,
- Figur 3: eine perspektivische Ansicht einer Haltevorrichtung mit einer modifizierten Rippenstruktur analog Figur 1 und 2;
- Figur 4: eine Draufsicht auf die Haltevorrichtung von Figur 3,
- Figur 5: eine Draufsicht auf eine Haltevorrichtung mit einer weiteren modifizierten Rippenstruktur analog zu Figur 1 bis 4 sowie
- Figur 6: einen Querschnitt durch eine Lagerung für einen Stabilisator für ein Fahrwerk eines Kraftfahrzeugs, mit der Haltevorrichtung von Figur 1 und 2.

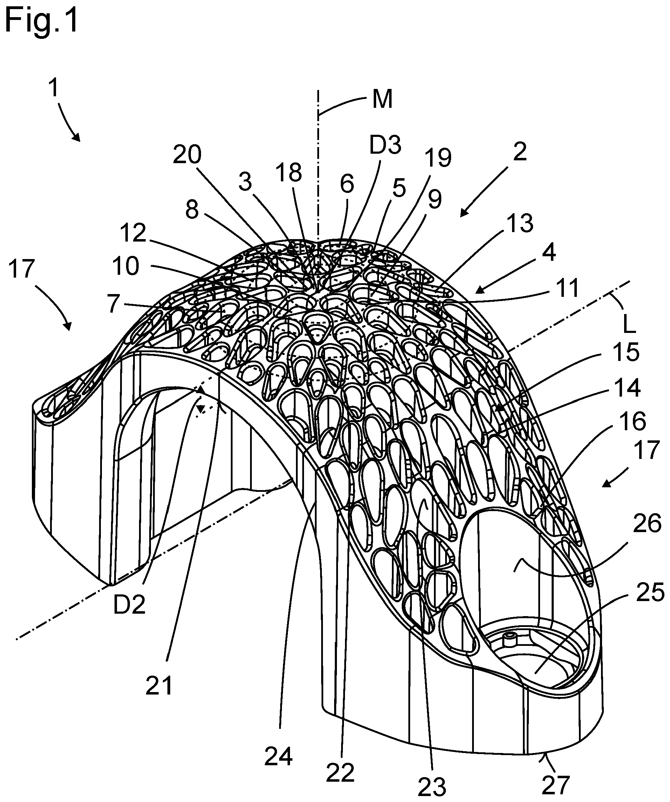

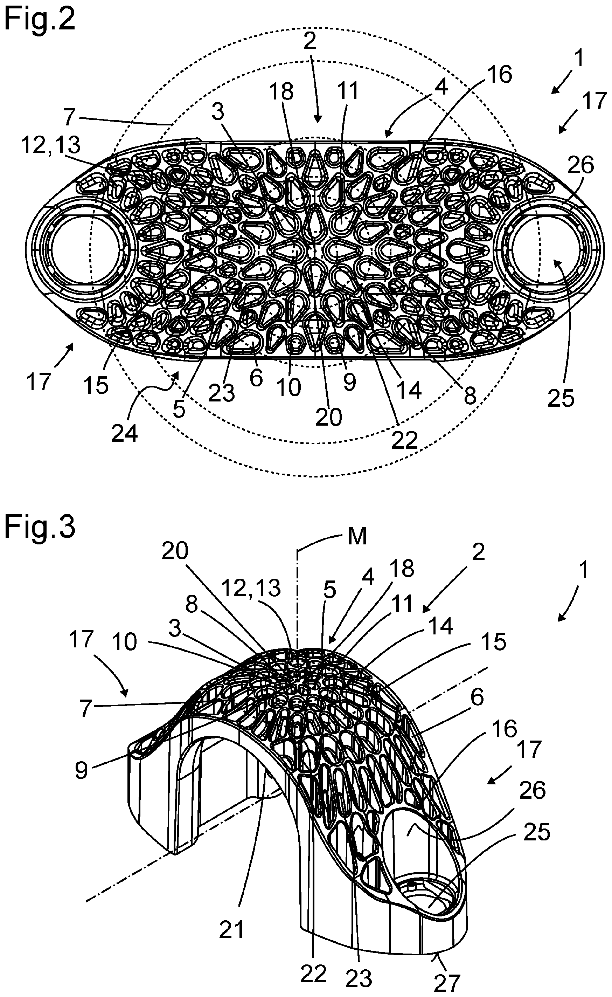

In Figur 1 und 2 ist eine Haltvorrichtung 1 für einen Stabilisator 30 für ein Kraftfahrzeug dargestellt. Die Haltevorrichtung 1 weist einen Bogenabschnitt 2 mit einem zentralen Angussbereich 3 und sowie eine an dem Bogenabschnitt 2 um den Angussbereich 3 gebildete Rippenstruktur 4 auf. Die Rippenstruktur 4 weist mehrere Rippen 5 und mehrere zwischen den Rippen 5 gebildete Ausnehmungen 6 auf.

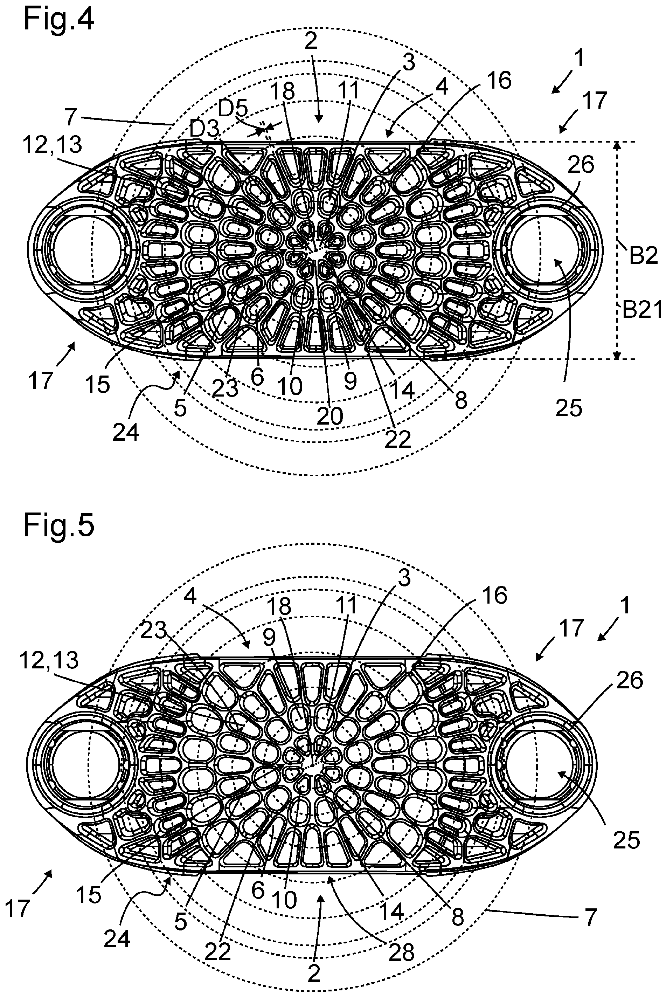

Die Rippen 5 der Rippenstruktur 4 sind derart angeordnet, dass die Ausnehmungen 6 in Draufsicht auf den Angussbereich 3 auf mehreren konzentrisch um den Angussbereich 3 bzw. eine Angussachse angeordneten Kreislinien 7 (vgl. Figur 4 und 5) mit unterschiedlichen Radien liegen.

Um den Angussbereich 3 sind zumindest vier, hier beispielsweise acht Ausnehmungen 6 in Umfangsrichtung verteilt angeordnet. Diese Ausnehmungen 6 sind auf einer Kreislinie mit dem geringsten Radius zu dem Angusspunkt bzw. Angussachse, also der kleinsten Kreislinie 8, angeordnet. Die Ausnehmungen 6 auf der kleinsten Kreislinie 8 können jeweils im gleichen Abstand oder alternativ in zufälligen Abständen in Umfangsrichtung um den Angussbereich 3 voneinander angeordnet sein. Hier sind die Ausnehmungen 6 auf der kleinsten Kreislinie 8 jeweils in einem Winkel von 90° voneinander um den Angussbereich 3 verteilt angeordnet.

Das Gesamtvolumen aller Ausnehmungen 6 steht zu einem Gesamtvolumen des Materials der Haltervorrichtung 1 in einem Verhältnis von größer als 30 %, insbesondere größer 40 %. Die Rippenstruktur 4 weist 80 bis 140 Ausnehmungen 6, hier beispielsweise 135 Ausnehmungen 6 auf. Die Rippen 5 der Rippenstruktur 4 sind derart angeordnet, dass die Ausnehmungen 6 der ersten, kleinsten Kreislinie 8 zu den Ausnehmungen 6 einer radial benachbarten zweiten Kreislinie 9 zumindest teilweise in Umfangsrichtung versetzt angeordnet sind. Die zweite Kreislinie 9 weist einen im Vergleich zu einem ersten Radius der ersten Kreislinie 8 größeren zweiten Radius auf.

Die Rippenstruktur weist 3 bis 14, hier beispielsweise 14 Kreislinien 7 mit steigenden Radien zum Angussbereich 3 auf. Die auf der ersten Kreislinie 8 angeordneten Ausnehmungen 6 sind als erste Ausnehmungen 10 und die auf der zweiten Kreislinie 9 angeordneten Ausnehmungen 6 als zweite Ausnehmungen 11 bezeichnet.

Darüber hinaus können die Ausnehmungen 6 einer zu der ersten und/oder zweiten Kreislinie 8, 9 radial benachbarten dritten Kreislinie 12 zu den ersten Ausnehmungen 10 oder den zweiten Ausnehmungen 11 zumindest teilweise in Umfangsrichtung versetzt angeordnet sein. Weitere auf einer zu der ersten, zweiten und/oder dritten Kreislinie 8, 9, 12 radial benachbarten Kreislinie 7 angeordnete Ausnehmungen 6 können jeweils in Umfangsrichtung versetzt angeordnet sein.

Die Ausnehmungen 6 radial benachbarter Kreislinien 7, zum Beispiel der ersten und zweiten Kreislinie 8. 9, können in Draufsicht auf den Angussbereich 3 radial überlappend angeordnet sein. Die radiale Überlappung kann durch die Form der Ausnehmungen 6 und/oder das Verhältnis der Radien der benachbarten Kreislinien 7 umgesetzt werden.

Auf der größten Kreislinie 13 ist mindestens die zweifache Anzahl an Ausnehmungen 6 als auf der kleinsten Kreislinie 8 vorgesehen. Unter der größten Kreislinie 13 wird die letzte Kreislinie 7 verstanden, auf der über ihrem gesamten Umfang verteilt Ausnehmungen 6 angeordnet sind. Die größte Kreislinie 13 kann in Richtung einer Längsachse L des Bogenabschnitts 2 den größten Radius aufweisen. Auf der größten Kreislinie 13 sind zumindest acht, hier beispielsweise 18 Ausnehmungen 6 angeordnet.

Die Ausnehmungen 6 sind in Draufsicht (wie in Figur 4 und 5) auf den Angussbereich 3 beispielsweise kreisförmig, wabenförmig und/oder tropfenförmig ausgebildet. Zusätzlich können die Ausnehmungen 6 in Draufsicht auf den Angussbereich 3 ellipsenförmig und/oder polygonförmig, beispielsweise dreieckig oder rechteckig ausgebildet sein.

Die auf einer Kreislinie 7 angeordneten Ausnehmungen 6 können eine oder mehrere der Formen aufweisen. Tropfenförmige Ausnehmungen 6 können derart angeordnet sein, dass eine durch den spitz zulaufenden Umfang gebildete Spitze 14 der Tropfenform 15 jeweils radial in Richtung auf den Angussbereich 3 bzw. die Angussachse oder in entgegensetze Richtung hierzu ausgerichtet ist. Ferner können die Ausnehmungen 6 unabhängig von der jeweiligen Form jeweils abgerundete Ecken 16 aufweisen.

Die Gestaltung der Rippenstruktur 4, beispielsweise die Gestaltung der Form der Ausnehmungen 6 und deren Position auf dem Bogenabschnitt 2 kann mit der FEM-Berechnung oder anderen Simulations-Berechnung unterstützt werden.

Die Haltevorrichtung 1 ist einstückig aus einem faserverstärkten Kunststoff gebildet, und an dem Bogenabschnitt 2 ist endseitig jeweils ein Stützabschnitt 17 gebildet. Der Angussbereich 3 ist zentral, d.h. in Draufsicht auf den Angussbereich 3 mittig, an dem Bogenabschnitt 2 angeordnet. Der Angussbereich 3 bezeichnet einen durch die Ausnehmungen 6 der Rippenstruktur 4 begrenzten Bereich um einen Angusspunkt 18 der Haltevorrichtung 1. Der Angussbereich 3 weist einen größeren Durchmesser D3 als eine Dicke D5 der Rippen 5 auf. Hier bezeichnet der Durchmesser D3 des Angussbereichs 3 den Kantenabstand zwischen gegenüberliegenden Kanten 19 eines vieleckigen Umfangs 20 des Angussbereichs 3.

Der Bogenabschnitt 2 weist eine Innenfläche 21 zum Aufnehmen eines Gummilagers und eine Außenfläche 22 auf. Die Innenfläche 21 erstreckt sich bogenförmig um die Längsachse L und definiert eine zu dieser senkrechte Mittelachse M. Der Angussbereich 3 ist auf der Mittelachse M angeordnet. Die Innenfläche 21 und die Außenfläche 22 des Bogenabschnitts 2 sind in radialer Richtung zu der Längsachse L im Abstand voneinander angeordnet. Der Abstand zwischen der Innenfläche 21 und der Außenfläche 22 definiert die Dicke D2 des Bogenabschnitts 2. Der Bogenabschnitt 2 geht an der Außenfläche 22 insbesondere kantenlos in die Stützabschnitte 17 über. Die Ausnehmungen 6 weisen jeweils an die Rippen 5 angrenzende Seitenwände 23 auf, die parallel zu der Mittelachse M und/oder senkrecht zu der Längsachse L des Bogenabschnitts 2 angeordnet sind. Die Dicke D5 der Rippen 5 bezeichnet jeweils den Abstand zweier durch eine Rippe 5 voneinander getrennter Ausnehmungen 6.

Der Bogenabschnitt 2 erstreckt sich in seiner Breite B2 parallel bzw. in axialer Richtung zur Längsachse L. Die Mittelachse M ist in Richtung entlang der Längsachse L mittig einer Breite B21 der Innenfläche 21 senkrecht zu der Längsachse L angeordnet. Der Angussbereich 3 kann auf der Mittelachse M, wie hier beispielsweise an der Außenfläche 22, oder an der Innenfläche 21 des Bogenabschnitts 2 angeordnet sein. Der Angusspunkt 18 ist auf der Mittelachse M angeordnet.

Die Stützabschnitte 17 sind quer, insbesondere senkrechte zur Längsachse L jeweils an Enden 24 des Bogenabschnitts 2 gebildet und weisen jeweils eine Öffnung 25 zum Anordnen eines Verbindungselements auf. Die Öffnungen 25 verlaufen senkrecht zur Längsachse L und parallel zu der Mittelachse M. An den Stützabschnitten 17 ist jeweils eine die Öffnungen 25 umgebende Kreisrippe 26 zum Verstärken vorgesehen. Die Öffnungen 25 der Stützabschnitte 17 sind jeweils in Draufsicht auf den Angussbereich 3 von den Ausnehmungen 6 der Rippenstruktur 4 zumindest bis zur Hälfte in Umfangsrichtung umschlossen. Die Stützabschnitte 21 weisen jeweils eine Stützfläche 27 zum Anordnen der Haltevorrichtung 1 an einer Oberfläche des Fahrwerks des Kraftfahrzeugs auf.

Figur 4 zeigt eine zweite Ausführungsform der in den Figuren 1 und 2 gezeigten Haltevorrichtung 1. Für gleiche bzw. einander entsprechende Bauteile oder Elemente werden gleiche Bezugszeichen verwendet. Die in Figur 4 gezeigte Haltevorrichtung 1 unterscheidet sich von der in den Figuren 1 und 2 gezeigten Haltevorrichtung 1 durch eine unterschiedliche Gestaltung des Angussbereichs 3 und der Rippenstruktur 4. Der Angussbereich 3 ist kreisförmig gebildet. Die Rippen 5 und Ausnehmungen 6 der Rippenstruktur 4 weisen alternative Ausrichtungen, Formen und Anordnungen zum Angussbereich 3 auf.

Figur 5 zeigt eine dritte Ausführungsform der in Figur 1 bis 4 gezeigten Haltevorrichtung 1. Für gleiche bzw. einander entsprechende Bauteile oder Elemente werden gleiche Bezugszeichen verwendet. Die in Figur 5 gezeigte Haltevorrichtung 1 unterscheidet sich von der in Figur 1 und 2 gezeigten Haltevorrichtung 1 dadurch, dass die Ausnehmungen 6 den Bogenabschnitt 2 von der Außenfläche 22 bis zur Innenfläche 21 durchdringen. Die Ausnehmungen 6 der von der ersten Kreislinie 8 ausgehenden vier Kreislinien 7 mit jeweils steigendem Radius durchdringen den Bogenabschnitt 2. Die Innenfläche 21 weist eine durch die Ausnehmungen 6 unterbrochene und durch die Rippen 5 gebildete Gitterstruktur 28 auf.

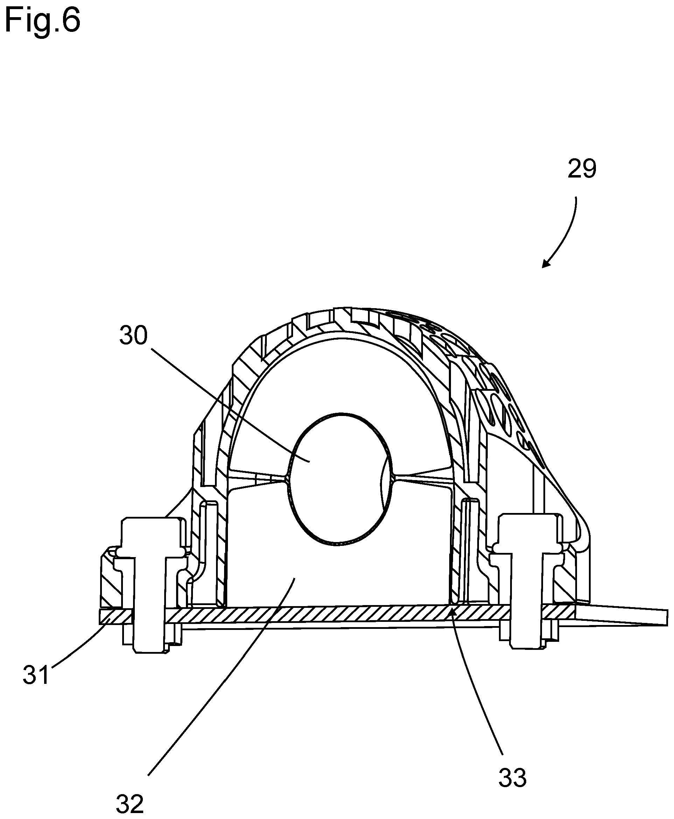

Figur 6 zeigt eine Lagerung 29 für einen Stabilisator 30 für ein Kraftfahrzeug mit der Haltevorrichtung 1, einem Unterteil 31 und einem zwischen dem Bogenabschnitt 2 der Haltevorrichtung 1 und dem Unterteil 31 angeordneten Gummilager 32. Das Unterteil 31 und der Bogenabschnitt 2 bilden eine Aufnahme 33 für des Gummilager 32. Der Stabilisator 30 ist in dem Gummilager 32 zwischen dem Unterteil 31 und der Haltevorrichtung 1 gelagert.

Alle in Verbindung mit einzelnen Ausführungsformen der Erfindung erläuterten Merkmale können in unterschiedlicher Kombination für die Haltevorrichtung 1 und die Lagerung 29 vorgesehen sein, um deren vorteilhafte Wirkungen zu realisieren, auch wenn diese zu unterschiedlichen Ausführungsformen beschrieben worden sind. Beispielsweise können auch die an dem Bogenabschnitt 2 angeordneten Ausnehmungen 6 der Haltevorrichtung 1 von Figur 1 und 2 den Bogenabschnitt 2 bis zur Innenfläche 21 durchdringen. Ferner können bei allen Ausführungsformen auch zwei oder mehrere Angussbereiche 3 vorgesehen sein. Die Ausnehmungen 6 der Rippenstruktur 5 sind in diesem Fall jeweils in Draufsicht auf die Angussbereiche 3 auf konzentrisch um den jeweiligen Angussbereich 3 angeordneten Kreislinien 7 angeordnet. Die Angussbereiche 3 können an unterschiedlichen Positionen auf der Innenfläche 21 oder der Außenfläche 22 des Bogenabschnitts 2 oder an den Stützabschnitten 17 angeordnet sein.

### Bezugszeichenliste

- 1: Haltvorrichtung
- 2: Bogenabschnitt
- 3: Angussbereich
- 4: Rippenstruktur
- 5: Rippen
- 6: Ausnehmung
- 7: Kreislinie
- 8: erste (kleinste) Kreislinie
- 9: zweite Kreislinie
- 10: erste Ausnehmung
- 11: zweite Ausnehmung
- 12: dritte Kreislinie
- 13: größte Kreislinie
- 14: Spitze
- 15: Tropfenform
- 16: Ecke
- 17: Stützabschnitt
- 18: Angusspunkt
- 19: Kante
- 20: Umfang des Angussbereichs
- 21: Innenfläche
- 22: Außenfläche
- 23: Seitenwand
- 24: Ende des Bogenabschnitts
- 25: Öffnung des Stützabschnitts
- 26: Kreisrippe
- 27: Stützfläche
- 28: Gitterstruktur
- 29: Lagerung
- 30: Stabilisator
- 31: Unterteil
- 32: Gummilager
- 33: Aufnahme
- B2: Breite des Bogenabschnitts
- B21: Breite der Innenfläche
- D2: Dicke des Bogenabschnitts
- D3: Durchmesser des Angussbereichs
- D5: Dicke der Rippe
- L: Längsachse
- M: Mittelachse

## Patentansprüche

1. Haltevorrichtung für einen Stabilisator für ein Kraftfahrzeug, umfassend:
einen Bogenabschnitt (2) mit zumindest einem Angussbereich (3), und
zumindest eine an dem Bogenabschnitt (2) gebildete Rippenstruktur (4) mit mehreren Rippen (5) und mehreren zwischen den Rippen (5) gebildeten Ausnehmungen (6),
**dadurch gekennzeichnet,**
**dass** der Angussbereich (3) zentral an dem Bogenabschnitt (2) angeordnet ist und die Rippenstruktur (4) um den Angussbereich (3) gebildet ist, und
**dass** die Rippen (5) der Rippenstruktur (4) derart angeordnet sind, dass die Ausnehmungen (6) in Draufsicht auf den Angussbereich (3) auf mindestens zwei konzentrisch um den Angussbereich (3) angeordneten Kreislinien (7) mit unterschiedlichen Radien liegen,
wobei auf einer Kreislinie mit kleinstem Radius zumindest drei Ausnehmungen (6) in Umfangsrichtung um den Angussbereich (3) verteilt angeordnet sind.

2. Haltevorrichtung nach Anspruch 1,
**dadurch gekennzeichnet,**
**dass** das Gesamtvolumen aller Ausnehmungen (6) zu einem Gesamtvolumen des Materials des Bogenabschnitts (2) in einem Verhältnis von größer als 30 %, insbesondere größer als 40 % steht.

3. Haltevorrichtung nach Anspruch 1 oder 2,
**dadurch gekennzeichnet,**
**dass** die Rippen (5) der Rippenstruktur (4) derart angeordnet sind, dass die Ausnehmungen (6) einer ersten Kreislinie (8) zu den Ausnehmungen (6) einer radial benachbarten Kreislinie (9) zumindest teilweise in Umfangsrichtung versetzt angeordnet sind.

4. Haltevorrichtung nach einem der Ansprüche 1 bis 3,
**dadurch gekennzeichnet**,
der Bogenabschnitt (2) eine Innenfläche (21) zum Aufnehmen eines Gummilagers (32) und eine Außenfläche (22) aufweist, wobei die Innenfläche (21) sich bogenförmig um eine Längsachse (L) erstreckt und eine zu dieser senkrechte Mittelachse (M) definiert, wobei der Angussbereich (3) auf der Mittelachse (M) angeordnet ist.

5. Haltevorrichtung nach Anspruch 4,
**dadurch gekennzeichnet,**
**dass** die Ausnehmungen (6) den Bogenabschnitt (2) von der Außenfläche (22) bis zur Innenfläche (21) durchdringen.

6. Haltevorrichtung nach Anspruch 1 bis 5,
**dadurch gekennzeichnet,**
**dass** zumindest eine Mehrzahl von Ausnehmungen (6) auf zumindest der kleinsten Kreislinie (8) und einer weiteren Kreislinie in Draufsicht auf den Angussbereich (3) als unrunde, insbesondere tropfenförmige oder elliptische, Ausnehmungen ausgebildet sind, wobei die unrunden Ausnehmungen strahlenförmig um den Angussbereich (3) ausgerichtet sind.

7. Haltevorrichtung nach einem der Ansprüche 1 bis 6,
**dadurch gekennzeichnet,**
**dass** die Rippenstruktur (4) Ausnehmungen (6) auf mehreren Kreislinien (7) aufweist, wobei die Ausnehmungen so gestaltet und verteilt sind, dass die dazwischen gebildeten Stegabschnitte zumindest weitestgehend eine gleichbleibende Wandstärke aufweisen.

8. Haltevorrichtung nach einem der Ansprüche 1 bis 7,
**dadurch gekennzeichnet,**
**dass** die Wandstärke der Stegabschnitte mindestens 1,5 mm beträgt, insbesondere zwischen 2,0 mm und 2,5 mm.

9. Haltevorrichtung nach einem der Ansprüche 1 bis 8,
**gekennzeichnet durch** zwei endseitig an dem Bogenabschnitt (2) gebildete Stützabschnitte (17), die jeweils eine Öffnung (25) zum Anordnen eines Verbindungselements aufweisen, wobei die Rippenstruktur (4) die Öffnungen (25) jeweils mindestens bis zur Hälfte in Umfangsrichtung umschließt.

10. Haltevorrichtung nach Anspruch 9,
**dadurch gekennzeichnet,**
**dass** der Bogenabschnitt (2) und die Stützabschnitte (17) einstückig aus einem faserverstärkten Kunststoff ausgebildet sind.

11. Haltevorrichtung nach einem der Ansprüche 1 bis 10,
**dadurch gekennzeichnet,**
**dass** die Rippen (5) der Rippenstruktur (4) derart angeordnet sind, dass zumindest eine Teilzahl der auf unterschiedlichen Kreislinien (7) angeordneten Ausnehmungen (6) in Draufsicht auf den Angussbereich (3) radial überlappend angeordnet ist.

12. Haltevorrichtung nach einem der Ansprüche 1 bis 11,
**dadurch gekennzeichnet,**
**dass** der Bogenabschnitt (2) zwei oder mehr Angussbereiche (3) aufweist, wobei die Ausnehmungen (6) der Rippenstruktur (4) jeweils in Draufsicht einen zugehörigen Angussbereich (3) jeweils auf konzentrisch um diesen angeordneten Kreislinien (7) liegen.

13. Lagerung für einen Stabilisator für ein Kraftfahrzeug, mit
- einer Haltevorrichtung (1) nach einem der Ansprüche 1 bis 12,
- einem Unterteil (31) und
- einem zwischen dem Bogenabschnitt (2) der Haltevorrichtung (1) und dem Unterteil (31) angeordneten Gummilager (32).
